# EUROPÄISCHE PATENTSCHRIFT

(11) **EP 3 022 338 B1**
(45) Veröffentlichungstag und Bekanntmachung des Hinweises auf die Patenterteilung: **12.09.2018**
(21) Anmeldenummer: 14735893.1
(22) Anmeldetag: 27.06.2014
(51) Int. Cl.: C25D 11/02, C25D 11/04, C25D 11/16, C25D 11/26, F16D 65/00, F16D 65/12, C23C 2/12, C23C 2/04, C23C 2/26

(54) **VERFAHREN ZUR HERSTELLUNG EINER BREMSSCHEIBE SOWIE BREMSSCHEIBE**
METHOD FOR PRODUCING A BRAKE DISK, AND BRAKE DISK
PROCÉDÉ POUR LA FABRICATION D'UN DISQUE DE FREIN AINSI QUE DISQUE DE FREIN

(30) Priorität: 15.07.2013 DE 102013213790
(43) Veröffentlichungstag der Anmeldung: 25.05.2016
(73) Patentinhaber: Ford Global Technologies, LLC, Dearborn, MI 48126 (US)
(72) Erfinder: BRUGGEN, Ivan, B-3770 Riemst (BE); GRABIEC, Tomasz Pawel, 51427 Bergisch Gladbach (DE); VERPOORT, Clemens Maria, 40789 Monheim (DE)
(74) Vertreter: Dörfler, Thomas
(86) Internationale Anmeldenummer: PCT/EP2014/063643
(87) Internationale Veröffentlichungsnummer: WO 2015/007497

(56) Entgegenhaltungen:
- DE-A1- 2 048 510
- DE-A1-102004 016 098
- DE-A1-102008 019 284
- US-A1- 2008 196 986

## Beschreibung

Die vorliegende Erfindung betrifft ein Verfahren zur Herstellung einer Bremsscheibe für ein Fahrzeug nach dem Oberbegriff des Anspruchs 1, sowie eine Bremsscheibe für ein Fahrzeug nach dem Oberbegriff des Anspruchs 5.

Bei Fahrzeugen, insbesondere bei Kraftfahrzeugen, bilden Scheibenbremsen die wohl am weitesten verbreitete Bauart von Bremsanlagen. Scheibenbremsen setzen sich im Wesentlichen aus einer Bremsscheibe und einem die Bremsscheibe randseitig umgreifenden Bremssattel zusammen. Hierbei ist die Bremsscheibe über eine drehbar im Achsschenkel gelagerte Radnabe mit dem abzubremsenden Rad des Fahrzeugs verbunden. Demgegenüber ist der Bremssattel an dem Achsschenkel fixiert. Die eigentliche Verzögerung wird durch an die Bremsscheibe anlegbare Bremsklötze erreicht, welche zu beiden Seiten der Bremsscheibe zwischen ihr und dem Bremssattel angeordnet sind.

Je nach Anwendungsfall können Bremsscheiben sowohl aus Eisen aber auch aus Karbon-Keramik oder Aluminium bestehen. Dabei sollten Bremsscheiben eine möglichst verschleißarme sowie wenig Feinstaub abgebende Oberfläche aufweisen. Um dies zu erreichen, wird eine möglichst harte Oberfläche angestrebt. So wird beispielsweise bei Bremsscheiben aus Aluminium entsprechend Hartstoff-Partikel z.B. aus Siliziumkarbid (SiC) zugesetzt, wodurch sich eine verschleißfeste Oberfläche ergibt. Allerdings ist die Herstellung von Bremsscheiben aus nichteisenhaltigen Werkstoffen mitunter schwierig und zumeist kostenintensiv.

Eine andere Form der Ausbildung einer solchen Schutzschicht kann mit thermischem Spritzen erreicht werden. Hierbei wird das auf die Oberfläche eines Basiskörpers der Bremsscheibe aufzutragende Material zuvor durch Hitzeeinwirkung erweicht und in Form einzelner Partikel über einen Gasstrom beschleunigt. Beim Auftreffen der Partikel entsteht eine rein mechanische Verbindung ohne Aufschmelzen der Oberfläche des Basiskörpers. Bei den Materialien kann es sich um Metalle sowie oxidkeramische oder karbidische Werkstoffe handeln. Nachteilig hierbei ist neben den hohen Kosten insbesondere die Haltbarkeit derartiger Schutzschichten. So ist zumeist nur eine mäßige Aufrauhung der Oberfläche mittels Korund-Strahlen möglich, was zu keiner dauerhaft haltbaren mechanischen Verbindung führt. Speziell bei der Verwendung von hartem Gusseisen für den Basiskörper ist beispielsweise ein an sich vorteilhaftes Schwalbenschwanz-förmiges Aufrauen nicht möglich.

Die DE 10 2008 019 284 A1 offenbart Antriebskomponenten, wie Bremsen für Elektromotoren oder Kupplungen für Antriebe, wobei ein Belagträger offenbart ist, der bevorzugt aus einem Aluminium besteht. Der Bremsbelag wird nur durch anodische Oxidation des Belagträgers erzeugt. Besteht der Belagträger aus Grauguss oder Stahl kann der Bremsbelag ebenso durch anodische Oxidation erzeugt werden, wie implizit offenbart ist. Die DE 10 2008 019 284 A1 weist also den Weg, den Belag durch anodische Oxidation direkt aus dem Belagträger selbst auszubilden.

Die gattungsbildende DE 20 48 510 A1 offenbart eine Bremsscheibe für Scheibenbremsen. Die Bremsscheibe besteht aus gegossenem Leichtmetall, also aus Aluminium. Auf den Bremsflächen ist ein verschleißfester Bremsring angeordnet, der aus einem Eisenwerkstoff besteht. Die DE 20 48 510 A1 offenbart, den Bremsring nur mit seiner an das Aluminium anzugießenden Fläche quasi als Pufferschicht kurzzeitig in eine überhitzte Aluminiumschmelze zu tauchen, und anschließend das Aluminium in der Bremsscheibengießform an diese Fläche anzugießen. So wird der Bremsring über eine im Verbundgußverfahren erzeugte FeₓAl_{y}-Schicht intermetallisch mit den Bremscheibenringen verbunden.

Die US 2008/0196986 A1 offenbart eine Bremsscheibe aus einem Leichtmetall, wie z.B. aus Titan-Aluminium-Legierungen. Zudem ist offenbart, dass Partikel in dem Überzug angeordnet sind , wobei die beiden Schichten des Überzuges bevorzugt mittels PVD, oder mittels Hochleistungsimpulsmagnetronsputtern oder mittels Verdampfungstechniken aufzubringen sind.

Die DE 10 2004 016 098 A1 betrifft ein Verfahren zur Herstellung einer Bremsscheibe für ein Fahrzeug, welche mindestens einen Grundkörper aufweist, welcher mindestens partiell im Bereich seiner äußeren Oberfläche eine verschleißfeste Schicht trägt, die als Reibschicht dient, wobei mindestens eine Zwischenschicht als haftvermittelnde Schicht und/oder als Korrosionsschutzschicht zwischen dem Grundkörper und mindestens einer äußeren verschleißfesten Schicht aufgebracht wird und diese mindestens eine Zwischenschicht galvanisch aufgebracht wird.

Aus der EP 1 432 849 A1 bzw. der WO 03/029529 A1 geht ein Verfahren zur Erzeugung einer Schutzschicht auf einem Bauteil aus Leichtmetall hervor. Das metallische Bauteil ist dabei im Wesentlichen aus Aluminium oder Magnesium oder aus einer Kombination der genannten Werkstoffe gebildet. Hierzu wird die Verwendung einer anodisierenden Lösung vorgeschlagen, in welche das metallische Bauteil eingelegt wird. Um die Schutzschicht auszubilden, fließt ein elektrischer Strom oder einen impulsförmiger Gleichstrom zwischen dem Bauteil (Anode) und einer Katode durch die Lösung. Dabei beträgt die mittlere Spannung maximal 125 Volt. Alternativ fließt Wechselstrom zwischen der Anode und der Kathode durch die Lösung. Die Lösung selbst beinhaltet Wasser und ein wasserlösliches komplexes Fluorid oder Oxyfluorid von einem Element der Gruppe bestehend aus Titan (Ti), Zirkonium (Zr), Silicium (Si) sowie einer Kombination daraus. Weiterhin kann das wasserlösliche komplexe Fluorid oder Oxyfluorid auch Hafnium (Hf), Zinn (Sn), Germanium (Ge), Bor (B) sowie eine Kombination aus allen zuvor genannten Elementen beinhalten. Zudem kann die Lösung auch eine anorganische Säure oder ein Salz sowie Fluor aufweisen, wobei die Lösung dann allerdings keines der Elemente Titan (Ti), Zirkonium (Zr), Hafnium (Hf), Silizium (Si), Germanium (Ge) oder Bor (B) im Wasser beinhaltet. Dabei weist die anodisierende Lösung einen pH-Wert von rund 3 bis rund 11 auf.

Die EP 1 921 177 A2 ist auf ein Verfahren zur Erzeugung von Verschleißschutzschichten auf eine Sperrschicht bildenden Metallen mittels Laserbehandlung gerichtet. Bei besagten Metallen handelt es sich insbesondere um Aluminium, Magnesium oder Titan sowie deren Legierungen und Mischungen. Durch den Einsatz des Lasers soll in Gegenwart von Sauerstoff eine Oxidschicht auf der Oberfläche des Metalls ausgebildet werden. Dabei soll eine unter der auszubildenden Oxidschicht gelegene Schicht des Metalls umgeschmolzen werden, ohne dabei mit dem Sauerstoff zu reagieren.

Gemäß der DE 20 2008 010 896 U1 soll ein Werkstoff, insbesondere ein Bauteil bereitgestellt werden, dessen Verwendung für das Gebiet des Maschinenbaus, insbesondere des Automobilbaus, vorzugsweise als Komponente von Verbrennungsmotoren, insbesondere Zylindern, Zylinderlaufbahnen, Kolben, Nockenwellen, Tassenstößeln, Ventilen, Lagerstellen an Pleueln oder dergleichen vorgesehen ist. Der für das Bauteil verwendete Werkstoff basiert auf einem eine Sperrschicht bildenden Metall oder dessen Legierung sowie Mischung. Ferner ist eine Verschleißschutzschicht vorgesehen, welche auf Basis eines Oxids der Sperrschicht ausgebildet ist. Zum Erhalt des Oxids wird beispielsweise eine anodische Oxidation der Werkstoffoberfläche des Bauteils vorgeschlagen. Der Oxidation kann ferner eine Schmelzbehandlung, insbesondere eine Aufschmelz- oder Umschmelzbehandlung der Werkstoffoberfläche folgen.

Die im Stand der Technik bekannten Verfahren sehen die Ausbildung einer an sich vorteilhaften Oxid-Schicht auf der Oberfläche des jeweiligen Bauteils vor. Diese trägt zur Erhöhung der Verschleißfestigkeit bei und liefert einen kathodischen Schutz gegenüber weiterem korrosivem Angriff. Hierzu wird der Werkstoff des Bauteils selbst einer geeigneten Prozedur unterzogen, durch welche sich die gewünschte Oxid-Schicht auf Basis des jeweiligen Werkstoffs ausbilden kann.

Da es sich bei Bremsscheiben um in Massen hergestellte Verschleißartikel handelt, werden diese primär aus Eisen, insbesondere aus Gusseisen gefertigt. Dabei ist die Ausbildung von Eisenoxid allerdings eher unerwünscht. So handelt es sich bei der Bildung von Oxid auf Basis des Eisens um einen korrosiven Vorgang, welcher die Bremsscheibe mit der Zeit zerstört. Neben der bereits durch leichten Flugrost verschlechterten Optik führt dieser nicht selten zu einer akustischen Beeinträchtigung, welche sich in unangenehmem Quietschen äußert.

Angesichts des aufgezeigten Standes der Technik bietet die einfache und haltbare Fertigung von Bremsscheiben als Massenartikel noch Raum für Verbesserungen.

Vor diesem Hintergrund liegt der Erfindung die Aufgabe zugrunde, ein Verfahren zur Herstellung einer Bremsscheibe für ein Fahrzeug vorzustellen, welches eine kostengünstige und dennoch haltbare Massenfertigung ermöglicht. Weiterhin soll eine Bremsscheibe für ein Fahrzeug aufgezeigt werden, welche neben einer kostengünstigen Fertigung insbesondere eine verbesserte Resistenz gegenüber korrosiven Angriffen besitzt, aber gleichzeitig einen hohen Verschleißwiderstand aufweist.
Der verfahrensmäßige Teil der Aufgabe findet seine Lösung in den Maßnahmen des Anspruchs 1. Der gegenständliche Teil dieser Aufgabe wird durch eine Bremsscheibe mit den Merkmalen des Anspruchs 5 gelöst. Weitere, besonders vorteilhafte Ausgestaltungen der Erfindung offenbaren die jeweiligen Unteransprüche.
Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.
Gemäß der Erfindung wird nachfolgend ein Verfahren zur Herstellung einer Bremsscheibe für ein Fahrzeug vorgestellt, bei welchem auf einem aus einem Eisenwerkstoff bestehenden Basiskörper der Bremsscheibe eine Schutzschicht angeordnet wird. Besagte Schutzschicht weist dabei eine Oxid-Schicht auf. Erfindungsgemäß umfasst das Verfahren die folgenden Schritte:
- Zumindest bereichsweises Aufbringen eines aus Aluminium oder Titan bestehenden metallischen Überzugs auf eine Oberfläche des aus einem Eisenwerkstoff bestehenden Basiskörpers durch Tauchen des Basiskörpers in einer Schmelze aus Aluminium oder Titan, wobei durch Hitzeeinwirkung eine intermetallische Verbindung zwischen dem metallischen Überzug und der Oberfläche des Basiskörpers erzeugt wird;
- Ausbilden der Oxid-Schicht auf dem mit der Oberfläche des Basiskörpers intermetallisch verbundenen metallischen Überzug, wobei die Oxid-Schicht aus einem Aluminiumoxid oder aus einem Titanoxid gebildet wird.

Erfindungsgemäß wird die Oxidschicht mit einer Dicke von 15 µm bis 50 µm ausgebildet.

Der besondere Vorteil besteht zunächst in der kostengünstigen Verwendung von Eisen für den Basiskörper der herzustellenden Bremsscheibe. Auch wenn der Basiskörper beispielsweise durch eine spanende Bearbeitung mittels Drehen gefertigt sein kann, wird dieser bevorzugt gegossen. Die Verwendung von Gusseisen ermöglicht dabei eine überaus einfache Formgebung für den Basiskörper. Besonders bevorzugt wird hierbei graues Gusseisen (Grauguss) eingesetzt, in welchem der Kohlenstoff in Form von Graphit vorliegt.

Weiterhin wird auf den so gewonnenen Basiskörper ein metallischer Überzug aufgebracht. Der metallische Überzug sollte dabei zumindest bereichsweise an der Oberfläche des Basiskörpers angeordnet werden. Der metallische Überzug ist insbesondere auf den oder die Bereich/e des Basiskörpers aufzutragen, welche später die vorteilhafte Oxid-Schicht aufweisen sollen.

Einer der wesentlichen Vorteile des erfindungsgemäßen Verfahrens liegt in der Erzeugung der metallischen Verbindung zwischen der Oberfläche des Basiskörpers und dem metallischen Überzug. Gegenüber dem thermischen Spritzen handelt es sich hierbei nicht um eine rein mechanische Verklammerung, sondern um eine intermetallische Verbindung. Hierdurch wird eine hochfeste Verbindung zwischen dem metallischen Überzug und dem Basiskörper erreicht, welche der anschließend auszubildenden Oxid-Schicht eine hohe Verschleißfestigkeit verleiht. Um die metallische Verbindung zu erzeugen, kann der mit dem metallischen Überzug versehene Basiskörper beispielsweise so weit erhitzt werden, bis sich eine intermetallische Verbindung zwischen seiner Oberfläche und dem metallischen Überzug ausbildet.

Letztlich kommt es zu der Ausbildung der Oxid-Schicht auf dem mit der Oberfläche des Basiskörpers metallisch verbundenen metallischen Überzug. Der besondere Vorteil der Oxid-Schicht liegt zunächst in der erhöhten Verschleißfestigkeit der so gefertigten Bremsscheibe. Überdies wird hierdurch ein kathodischer Schutz auf dem Basiskörper ausgebildet, welcher einen korrosiven Angriff verhindert. Dabei unterstützt die mikroskopisch raue Oberfläche der Oxid-Schicht die Bildung eines stabilen, dauerhaften Transferfilms. Im Ergebnis wird die ansonsten zwischen 60.000 km und 100.000 km liegende Verschleißgrenze für eine solche Bremsscheibe erhöht. Hinzu kommt die dauerhaft verbesserte Optik, welche aufgrund des sich nunmehr nicht ausbildenden Flugrosts mit einer verbesserten Akustik ohne etwaiges Quietschen einhergeht.

Vorgesehen ist, dass der metallische Überzug aus Aluminium (Al) besteht. Das mit dem Eisen des Basiskörpers intermetallisch verbundene Aluminium (Al) bildet dann die Basis für die auszubildende Oxid-Schicht, welche dann aus einem Aluminiumoxid gebildet wird. Alternativ hierzu kann der metallische Überzug auch aus Titan (Ti) bestehen. In diesem Fall bildet das dann intermetallisch mit dem Eisen des Basiskörpers verbundene Titan (Ti) die Basis für die auszubildende Oxid-Schicht, welche hierbei aus einem Titanoxid gebildet wird. Der Vorteil in der Verwendung von Aluminium (Al)- und/oder Titan (Ti)-Oxiden liegt darin begründet, dass durch die sich ausbildende Oxid-Schicht überaus hohe Verschleiß- und Korrosionsschutzwerte erzielen lassen.

Vorgesehen ist auch, dass der metallische Überzug durch Tauchen des Basiskörpers in eine entsprechende Schmelze aufgebracht werden kann. Hierfür wird zunächst entweder eine Schmelze aus Aluminium (Al) und/oder Titan (Ti) bereitgestellt. In besagte Schmelze wird der Basiskörper bevorzugt unter Schutzgas anschließend zumindest teilweise eingetaucht, wodurch dessen Oberfläche wenigstens bereichsweise mit der Schmelze benetzt wird. Besonders bevorzugt wird der Basiskörper dabei so lang in der Schmelze belassen, bis sich durch Eindiffusion der Schmelze die metallische Verbindung zwischen dem Basiskörper und dem metallischen Überzug ausbildet.

Alternativ kann der Basiskörper selbstverständlich auch zunächst mit der Schmelze aus Aluminium (Al) und/oder Titan (Ti) benetzt werden. Anschließend erfolgt dann beispielsweise in einem Ofen dessen Erhitzung bis zur Ausbildung der intermetallischen Verbindung zwischen Basiskörper und metallischem Überzug.

Der Vorteil des Tauchens unter Ausbildung der intermetallischen Verbindung ist in einem vereinfachten Herstellungsprozess zu sehen. So kann innerhalb einer einzelnen Station der Auftrag des metallischen Überzugs bei gleichzeitiger Ausbildung der intermetallischen Verbindung erfolgen.

Bevorzugt kann der mit dem metallischen Überzug versehene Basiskörper noch vor Ausbildung der Oxid-Schicht endbearbeitet werden. Selbstverständlich können etwaige spanende oder generell Material abtragende Bearbeitungen des Basiskörpers noch vor dem Auftrag des metallischen Überzugs erfolgen. Bei der Endbearbeitung handelt es sich im Wesentlichen um eine mechanische Oberflächenbearbeitung. Hierdurch wird der auf dem Basiskörper angeordnete und mit diesem metallisch verbundene metallische Überzug derart bearbeitet, dass sich insbesondere in den für einen Kontakt mit den Bremsklötzen vorgesehenen Bereichen der Bremsscheibe eine plane Oberfläche ergibt. Durch die Oberflächenbearbeitung nach dem Auftrag des mit dem Basiskörper metallisch verbundenen metallischen Überzugs ist sichergestellt, dass dieser keine unerwünschten Dickensprünge aufweisen kann. Dickensprünge der Bremsscheibe könnten ansonsten ein Rupfen bewirken, bei welchem einige Bereiche der Bremsscheibe einen verstärkten Kontakt zu den angenäherten Bremsklötzen aufweisen.

Sofern es sich bei dem metallischen Überzug um Aluminium (Al) handelt, kann die Oxid-Schicht aus Aluminium (Al) in vorteilhafter Weise mittels einer Micro Arc Oxidation (MAO) ausgebildet werden. Das so erzeugbare Aluminiumoxid (Al₂O₃) zeichnet sich neben seiner hohen Temperaturbeständigkeit und seiner großen Oberfläche sowie seiner vorteilhaften Säure-Basen-Eigenschaften durch seine gute Wechselwirkung mit anderen Metallen aus. Durch die Micro Arc Oxidation (MAO) werden die Eigenschaften der Oberfläche des Basiskörpers insofern verbessert, dass diese unter anderem an Härte und Verschleißfestigkeit zunimmt. Durch das genannte Verfahren wird die Oxid-Schicht aus Aluminium (Al) in eine dichte, atomar haftende Keramikschicht umgewandelt.

Beim alternativen Einsatz von Titan-Oxid Beschichtungen für den metallischen Überzug ist vorgesehen, dass die darauf auszubildende Oxid-Schicht in vorteilhafter Weise mittels einer Plasmaelektrolytischen Oxidation (PEO) ausgebildet werden. Das so ausbildbare Titanoxid (TiO₂) führt ebenfalls zu einer Zunahme an Härte und Verschleißfestigkeit des Basiskörpers der Bremsscheibe. Bei der Plasmaelektrolytischen Oxidation (PEO) wird die Oberfläche des metallischen Aluminium in einer Plasmaentladung entsprechend beschichtet. Auch hierbei wird eine Oxid-Schicht aus Titan (Ti) in vorteilhafter Weise als eine dichte, atomar haftende Keramikschicht erzeugt.

Die vorliegende Erfindung stellt ein gegenüber dem Stand der Technik verbessertes Verfahren zur Herstellung einer verschleißfesten und vor Korrosion geschützten Bremsscheibe zur Verfügung. So kann die an sich bereits vorteilhafte Verwendung von hartem und kostengünstigem Eisen für den Basiskörper in Form von Gusseisen beibehalten werden. Das anschließende unkomplizierte Tauchen des Basiskörpers in einer Schmelze aus Aluminium (Al) und/oder Titan (Ti) lässt hohe Taktraten für die Herstellung zu. Hierdurch eignet sich das vorliegende Verfahren bestens für die Massenfertigung günstiger und verschleiß- sowie korrosionsfester Bremsscheiben. Insbesondere die zunächst auszubildende intermetallische Verbindung von Basiskörper und metallischem Überzug ermöglicht eine überaus feste Grundlage für die anschließende Ausbildung der Oxid-Schicht auf Basis des Werkstoffs für den Überzug. Sowohl bei der Micro Arc Oxidation (MAO) als auch bei der Plasmaelektrolytischen Oxidation (PEO) handelt es sich um prozesssichere Verfahren zur Ausbildung der Oxid-Schicht, welche sich ebenfalls bestens für eine Massenproduktion der hier in Rede stehenden Bremsscheiben eignen.

Im weiteren Verlauf ist die Erfindung auch auf eine Bremsscheibe gerichtet, welche insbesondere durch das zuvor erläuterte Verfahren hergestellt wird. Nachfolgende Ausführungen zu der erfindungsgemäßen Bremsscheibe sind demnach im Zusammenhang mit dem erfindungsgemäßen Verfahren zu sehen, so dass sich dessen Merkmale grundsätzlich mit denen der Bremsscheibe vereinen lassen. Hierzu im Einzelnen:
Bei der in Rede stehenden Bremsscheibe handelt es sich bevorzugt um eine solche für ein Fahrzeug, insbesondere für ein Kraftfahrzeug. Die Bremsscheibe umfasst einen aus einem Eisenwerkstoff bestehenden Basiskörper, auf welchem zumindest bereichsweise eine Schutzschicht angeordnet ist. Besagte Schutzschicht weist dabei eine Oxid-Schicht auf. Der Basiskörper ist aus Eisen gefertigt, besonders bevorzugt ist dieser aus Gusseisen gebildet, so dass dessen Formgebung im Wesentlichen durch Gießen erfolgt ist. Dabei ist die Oxid-Schicht auf einem mit einer Oberfläche des Basiskörpers metallisch verbundenen metallischen Überzug ausgebildet.

Mit anderen Worten ist die vorteilhafte Oxid-Schicht hierbei auf einem metallischen Überzug ausgebildet, dessen Werkstoff von dem Werkstoff des Basiskörpers unterschiedlich ist. Insbesondere handelt es sich bei dem Werkstoff für den metallischen Überzug um einen Nicht-Eisen Werkstoff.

Die sich aus der zuvor aufgezeigten erfindungsgemäßen Bremsscheibe und den nachfolgend beschriebenen Merkmalen ergebenden Vorteile wurden bereits zuvor im Zusammenhang mit dem erfindungsgemäßen Verfahren erläutert und gelten für die erfindungsgemäße Bremsscheibe entsprechend.

Vorgesehen ist, dass der metallische Überzug aus Aluminium (Al) bestehen kann. Hierbei ist die vorteilhafte Oxid-Schicht aus einem Aluminiumoxid gebildet. Alternativ kann der metallische Überzug auch aus Titan (Ti) bestehen. In diesem Fall ist die vorteilhafte Oxid-Schicht aus einem Titanoxid gebildet.

Um eine möglichst plane Oberfläche des mit dem metallischen Überzug versehenen und mit diesem metallisch verbundenen Basiskörpers zu erhalten, ist der metallische Überzug oberflächenbearbeitet. Selbstverständlich kann der Basiskörper bereits vor dem Auftrag des metallischen Überzugs beispielsweise durch Span abhebende oder schleifende Bearbeitungen vorbereitet sein. Bei der Oberflächenbearbeitung des Überzugs wird dieser nachweislich so verändert, dass dieser beispielsweise an Stellen einer unerwünschten Aufdickung in seiner Auftragsdicke mechanisch verkleinert ist.

In Bezug auf die Auftragsdicke der Oxid-Schicht ist erfindungsgemäß vorgesehen, dass die Oxid-Schicht eine Dicke von 15,0 µm bis 50,0 µm besitzt. Bevorzugt kann die Dicke der Oxid-Schicht eine Dicke von 18,0 µm bis 22,0 µm aufweisen. Besonders bevorzugt besitzt die Oxid-Schicht eine Dicke von 20,0 µm.

Besteht die Bremsscheibe, also der Basiskörper aus Aluminium, was im Rahmen der vorliegenden Erfindung jedoch nicht vorgesehen ist, könnte natürlich auf ein Tauchbad verzichtet werden, wobei die weiteren Schritte entweder mittels MAO oder PEO durchgeführt werden können.
Weitere vorteilhafte Einzelheiten und Wirkungen der Erfindung sind im Folgenden anhand von unterschiedlichen, in den Figuren dargestellten Ausführungsbeispielen näher erläutert. Es zeigen:
- Fig. 1: eine schematische Darstellung einer erfindungsgemäßen Bremsscheibe in einer Ansicht,
- Fig. 2: einen Teilschnitt durch die erfindungsgemäße Bremsscheibe aus Fig. 1 in vertikaler Richtung,
- Fig. 3: einen Detailausschnitt eines Randbereichs der Bremsscheibe aus Fig. 2 in vergrößerter und ansonsten gleicher Darstellungsweise,
- Fig. 4: den Detailausschnitt aus Fig. 2 mit einer veränderten Oberfläche der Bremsscheibe sowie
- Fig. 5: ein Ablaufschema zum erfindungsgemäßen Verfahren zur Herstellung einer Bremsscheibe für ein Fahrzeug, insbesondere ein Kraftfahrzeug.

In den unterschiedlichen Figuren sind gleiche Teile stets mit denselben Bezugszeichen versehen, so dass diese in der Regel auch nur einmal beschrieben werden.

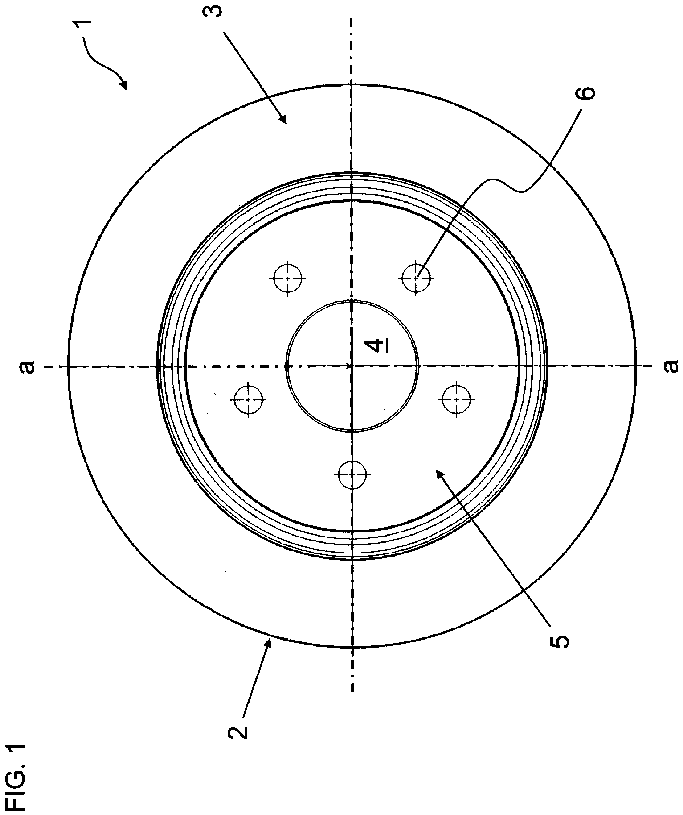

Fig. 1 ist eine schematische Darstellung einer erfindungsgemäßen Bremsscheibe 1 zu entnehmen. Diese weist einen kreisrunden Basiskörper 2 aus Gusseisen auf. Der Basiskörper besitzt in typischer Weise einen umlaufenden äußeren Bremskranz 3, welcher für den Kontakt mit einem nicht näher dargestellten Bremsklotz eines Bremssattels vorgesehen ist. Im Zentrum des Basiskörpers 2 ist eine Öffnung 4 vorgesehen, welche in einer Ausstellung 5 des Basiskörpers 2 angeordnet ist. Um die Öffnung 4 herum sind in gleichmäßigen Abständen vorliegend fünf Durchgangslöcher 6 durch die Ausstellung 5 hindurch angeordnet. Besagte Durchgangslöcher 6 dienen der Aufnahme hier nicht näher dargestellter Radbolzen, über welche die Bremsscheibe 1 zusammen mit einem nicht gezeigten Rad mit einer ebenfalls nicht gezeigten Radnabe verbindbar ist.

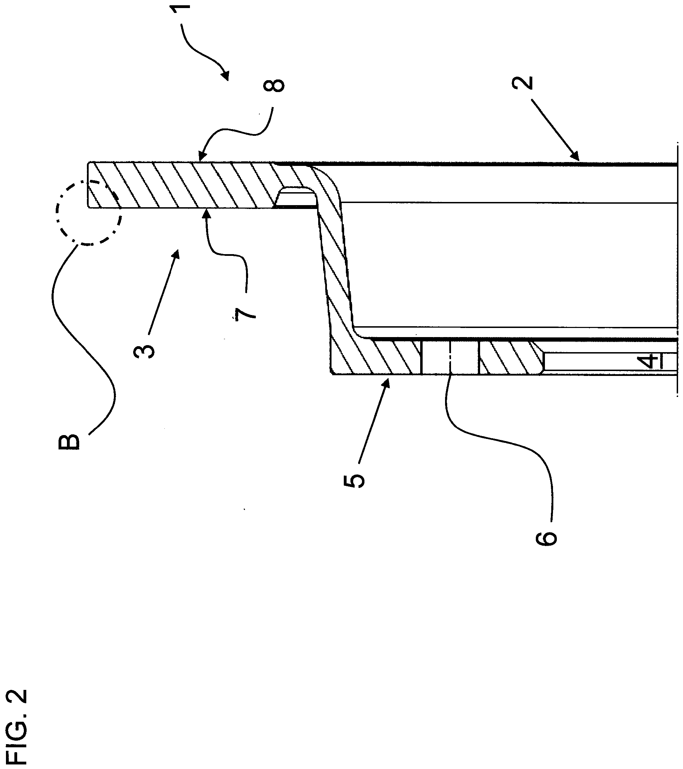

Eine Ebene a-a trennt mit Bezug auf die Darstellung von Fig. 1 die Bremsscheibe 1 in ihrer Vertikalen, wobei Fig. 2 die Ansicht auf einen Schnitt durch besagte Ebene a-a zeigt.

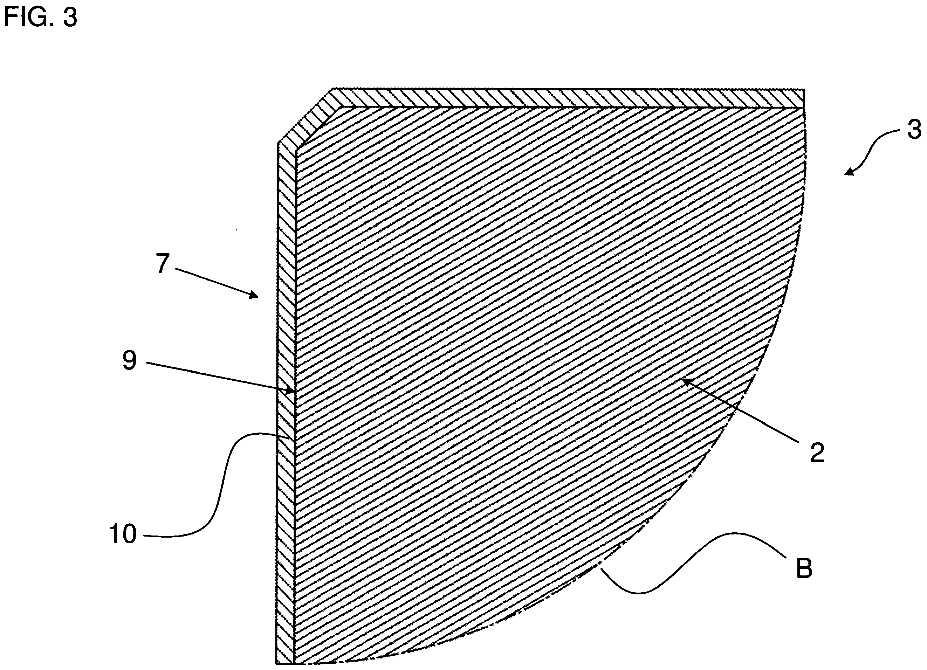

Fig. 2 zeigt einen Schnitt durch die Ebene a-a der Bremsscheibe 1 aus Fig. 1. Wie zu erkennen, steht die Ausstellung 5 gegenüber dem Bremskranz 3 des Basiskörpers 2 vor. Der Bremskranz 3 umfasst zwei parallel zueinander ausgerichtete Bremsflächen 7, 8, näherhin eine erste Bremsfläche 7 und eine zweite Bremsfläche 8. Der Bremskranz 3 weist einen strichpunktierten Kreis B auf, wobei der Bereich des Bremskranzes 3 innerhalb des Kreises B Inhalt der Fig. 3 ist.

Fig. 3 zeigt einen Detailausschnitt des Bremskranzes 3 aus Fig. 2 innerhalb des Kreises B. Der Vergrößerung des Bremskranzes 3 im Bereich seiner ersten Bremsfläche 7 ist zu entnehmen, dass auf einer Oberfläche 9 des Basiskörpers 2 in diesem Bereich ein metallischer Überzug 10 aufgebracht ist. Weiterhin weist der metallische Überzug 10 in nicht näher dargestellter Weise eine metallische Verbindung zu der Oberfläche 9 des Basiskörpers 2 auf.

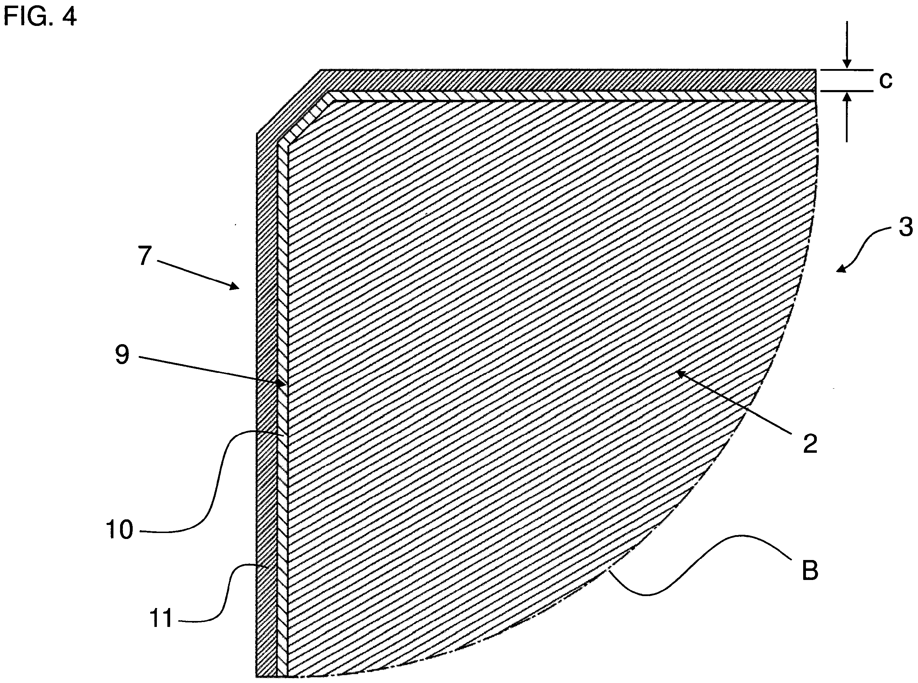

Fig. 4 ist der Detailausschnitt aus Fig. 3 zu entnehmen, wobei auf dem metallischen Überzug 10 nunmehr eine Oxid-Schicht 11 ausgebildet ist. Basis dieser Oxid-Schicht 11 bildet der metallische Überzug 10. Vorliegend besteht der metallische Überzug 10 aus Aluminium (Al). Hierauf wird die vorteilhafte Oxid-Schicht 11 aus einem Aluminiumoxid oder aus einem Titanoxid gebildet. Dabei weist die ausgebildete Oxid-Schicht 11 eine Dicke c auf. Die Dicke c beträgt vorliegend 20,0 µm. Grundsätzlich kann die Dicke c der Oxid-Schicht 11 von 15,0 µm bis 50,0 µm, insbesondere von 18,0 µm bis 22,0 µm betragen.

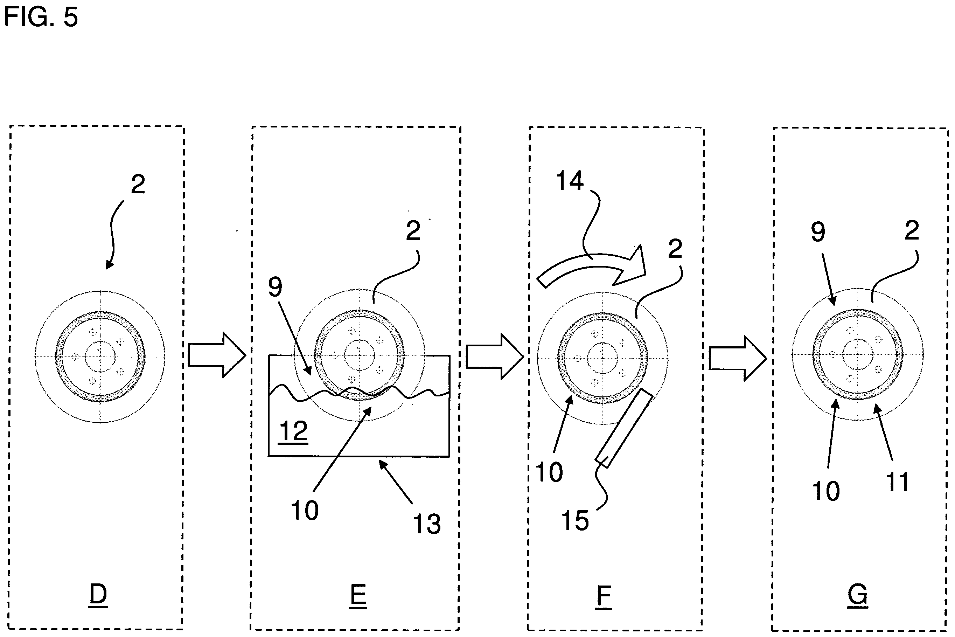

Fig. 5 ist das erfindungsgemäße Verfahren zur Herstellung einer solchen Bremsscheibe 1 in Form eines Ablaufschemas zu entnehmen. Hierzu wird in einem ersten Schritt D zunächst der Basiskörper 2 bereitgestellt. Dieser ist aus Eisen gebildet, bevorzugt aus Gusseisen, näherhin aus Grauguss.

In einem anschließenden zweiten Schritt E wird zumindest bereichsweise der metallische Überzug 10 auf die Oberfläche 9 des Basiskörpers 2 aufgebracht. Hierzu wird der Basiskörper 2 in eine Schmelze 12 aus Aluminium (Al) getaucht. Das Aluminium (Al) wurde hierfür zuvor innerhalb eines Schmelzbehälters 13 durch Hitzeeinwirkung aufgeschmolzen. Beim Eintauchen des Basiskörpers 2 in besagte Schmelze 12 wird eine intermetallische Verbindung zwischen der Oberfläche 9 des Basiskörpers 2 und dem metallischen Überzug 10 aus der Schmelze 12 erzeugt.

Gemäß einem nachfolgenden dritten Schritt F ist vorgesehen, dass der mit dem metallischen Überzug 10 versehene Basiskörper 2 bei Bedarf vor Ausbildung der Oxid-Schicht 11 mechanisch oberflächenbearbeitet wird. Hierzu kann der mit dem metallischen Überzug 10 versehene Basiskörper 2 beispielsweise in eine Rotation 14 versetzt werden und mittels eines Span abhebenden oder schleifenden Werkzeugs 15 bearbeitet werden.

In einem letzten Schritt G wird die Oxid-Schicht 11 auf dem mit der Oberfläche 9 des Basiskörpers 2 metallisch verbundenen metallischen Überzug 10 ausgebildet. Je nach verwendetem Metall für den metallischen Überzug 10 besteht die Oxid-Schicht 11 aus einem Aluminiumoxid oder aus einem Titanoxid. Auf dem metallischen Überzug 10 aus Aluminium (Al) wird die Oxid-Schicht 11 aus Aluminiumoxid mittels Micro Arc Oxidation (MAO) ausgebildet. Auf dem metallischen Überzug 10 aus Titan wird die Oxid-Schicht 11 mittels einer Plasmaelektrolytischen Oxidation (PEO) ausgebildet.

## Patentansprüche

1. Verfahren zur Herstellung einer Bremsscheibe (1) für ein Fahrzeug, bei welchem auf einem aus einem Eisenwerkstoff bestehenden Basiskörper (2) der Bremsscheibe (1) eine Schutzschicht angeordnet wird, wobei die Schutzschicht eine Oxid-Schicht (11) aufweist,
umfassend zumindest die folgenden Schritte:
- Zumindest bereichsweises Aufbringen eines aus Aluminium (Al) oder Titan (Ti) bestehenden metallischen Überzugs (10) auf eine Oberfläche (9) des aus Eisenwerkstoff bestehenden Basiskörpers (2) durch Tauchen des Basiskörpers (2) in einer Schmelze aus Aluminium (Al) oder Titan (Ti) wobei durch Hitzeeinwirkung eine intermetallische Verbindung zwischen dem metallischen Überzug (10) und der Oberfläche (9) des Basiskörpers (2) erzeugt wird;
- Ausbilden der Oxid-Schicht (11) auf dem mit der Oberfläche (9) des Basiskörpers (2) intermetallisch verbundenen metallischen Überzug (10), wobei die Oxid-Schicht (11) aus einem Aluminiumoxid oder aus einem Titanoxid gebildet wird,
**dadurch gekennzeichnet, dass**
die Oxidschicht (11) mit einer Dicke (c) von 15 µm bis 50 µm ausgebildet wird.

2. Verfahren nach Anspruch 1,
**dadurch gekennzeichnet, dass**
der mit dem metallischen Überzug (10) versehene Basiskörper (2) vor Ausbildung der Oxid-Schicht (11) mechanisch oberflächenbearbeitet wird.

3. Verfahren nach einem der vorhergehenden Ansprüche,
**dadurch gekennzeichnet, dass**
die Oxid-Schicht (11) aus Aluminium (Al) mittels Micro Arc Oxidation (MAO) ausgebildet wird.

4. Verfahren nach einem der Ansprüche 1 oder 2,
**dadurch gekennzeichnet, dass**
die Oxid-Schicht (11) aus Titan (Ti) mittels einer Plasmaelektrolytischen Oxidation (PEO) ausgebildet wird.

5. Bremsscheibe für ein Fahrzeug, hergestellt mit einem Verfahren nach einem der vorhergehenden Ansprüche, umfassend einen aus einem Eisenwerkstoff bestehenden Basiskörper (2) mit einer zumindest bereichsweise angeordneten Schutzschicht, wobei die Schutzschicht eine Oxid-Schicht (11) aufweist, wobei die Oxid-Schicht (11) auf einem mit einer Oberfläche (9) des Basiskörpers (2) durch Hitzeeinwirkung intermetallisch verbundenen aus Aluminium (Al) oder Titan (Ti) bestehenden metallischen Überzug (10) ausgebildet ist, wobei die Oxid-Schicht (11) aus einem Aluminiumoxid oder aus einem Titanoxid gebildet ist,
**dadurch gekennzeichnet, dass**
die Oxid-Schicht (11) eine Dicke (c) von 15 µm bis 50 µm besitzt.

6. Bremsscheibe nach Anspruch 5,
**dadurch gekennzeichnet, dass**
der metallische Überzug (10) vor Ausbildung der Oxid-Schicht (11) derart bearbeitet wird, dass sich eine plane Oberfläche ergibt.

7. Bremsscheibe nach einem der Ansprüche 5 oder 6,
**dadurch gekennzeichnet, dass**
die Oxid-Schicht (11) eine Dicke (c) von 18 µm bis 22 µm, vorzugsweise von 20 µm besitzt.

## Claims

1. Method for producing a brake disk (1) for a vehicle in which a protective layer that has an oxide layer (11) is arranged on a base body (2) of the brake disk (1) consisting of an iron material,
comprising at least the following steps:
- applying a metallic coating (10) consisting of aluminum (Al) or titanium (Ti), at least in certain regions, to a surface (9) of the base body (2) consisting of iron material by immersing the base body (2) in molten aluminum (Al) or titanium (Ti), an intermetallic connection being created between the metallic coating (10) and the surface (9) of the base body (2) by the action of heat;
- forming the oxide layer (11) on the metallic coating (10) that is intermetallically connected to the surface (9) of the base body (2),
the oxide layer (11) being formed from an aluminum oxide or from a titanium oxide,
**characterized in that**
the oxide layer is formed with a thickness (c) of from 15 µm to 50 µm.

2. Method according to Claim 1,
**characterized in that**
the base body (2) provided with the metallic coating (10) is mechanically surface-worked before the oxide layer (11) forms.

3. Method according to one of the preceding claims,
**characterized in that**
the oxide layer (11) of aluminum (Al) is formed by means of Micro Arc Oxidation (MAO).

4. Method according to to either of Claims 1 and 2,
**characterized in that**
the oxide layer (11) of titanium (Ti) is formed by means of Plasma Electrolytic Oxidation (PEO).

5. Brake disk for a vehicle, produced by a method according to one of the preceding claims, comprising a base body (2) consisting of an iron material with a protective layer arranged at least in certain regions, the protective layer having an oxide layer (11), wherein the oxide layer (11) is formed on a metallic coating (10) that is intermetallically connected by the action of heat to a surface (9) of the base body (2) and consists of aluminium (Al) or titanium (Ti), the oxide layer (11) being formed from an aluminum oxide or a titanium oxide, **characterized in that**
the oxide layer (11) has a thickness (c) of from 15 µm to 50 µm

6. Brake disk according to Claim 5,
**characterized in that**
before the oxide layer (11) is formed, the metallic coating (10) is worked in such a way that a planar surface is obtained.

7. Brake disk according to either of claims 5 and 6,
**characterized in that**
the oxide layer (11) has a thickness (c) of 18 µm to 22 µm, preferably of 20 µm.

## Revendications

1. Procédé de fabrication d'un disque de frein (1) pour un véhicule, selon lequel une couche de protection est agencée sur un corps de base (2) constitué par un matériau à base de fer du disque de frein (1), la couche de protection comprenant une couche d'oxyde (11), comprenant au moins les étapes suivantes :
- l'application au moins en zones d'un revêtement (10) métallique constitué par de l'aluminium (Al) ou du titane (Ti) sur une surface (9) du corps de base (2) constitué par un matériau à base de fer par immersion du corps de base (2) dans une masse fondue en aluminium (Al) ou titane (Ti), une liaison intermétallique entre le revêtement métallique (10) et la surface (9) du corps de base (2) étant formée sous l'effet de la chaleur ;
- la formation de la couche d'oxyde (11) sur le revêtement métallique (10) relié par une liaison intermétallique avec la surface (9) du corps de base (2), la couche d'oxyde (11) étant formée à partir d'un oxyde d'aluminium ou d'un oxyde de titane,
**caractérisé en ce que**
la couche d'oxyde (11) est formée en une épaisseur (c) de 15 µm à 50 µm.

2. Procédé selon la revendication 1, **caractérisé en ce que** le corps de base (2) muni du revêtement métallique (10) est usiné mécaniquement en surface avant la formation de la couche d'oxyde (11).

3. Procédé selon l'une quelconque des revendications précédentes, **caractérisé en ce que** la couche d'oxyde (11) en aluminium (Al) est formée par oxydation micro-arc (MAO) .

4. Procédé selon l'une quelconque des revendications 1 ou 2, **caractérisé en ce que** la couche d'oxyde (11) en titane (Ti) est formée par oxydation par plasma électrolytique (PEO).

5. Disque de frein pour un véhicule, fabriqué par un procédé selon l'une quelconque des revendications précédentes, comprenant un corps de base (2) constitué par un matériau à base de fer avec une couche de protection agencée au moins en zones, la couche de protection comprenant une couche d'oxyde (11), la couche d'oxyde (11) étant formée sur un revêtement métallique (10) constitué par de l'aluminium (Al) ou du titane (Ti) relié par une liaison intermétallique avec une surface (9) du corps de base (2) sous l'effet de la chaleur, la couche d'oxyde (11) étant formée à partir d'un oxyde d'aluminium ou d'un oxyde de titane,
**caractérisé en ce que**
la couche d'oxyde (11) présente une épaisseur (c) de 15 µm à 50 µm.

6. Disque de frein selon la revendication 5,
**caractérisé en ce que** le revêtement métallique (10) est usiné avant la formation de la couche d'oxyde (11) de manière à obtenir une surface plane.

7. Disque de frein selon l'une quelconque des revendications 5 ou 6, **caractérisé en ce que** la couche d'oxyde (11) présente une épaisseur (c) de 18 à 22 µm, de préférence de 20 µm.
